# EUROPÄISCHE PATENTSCHRIFT

(11) **EP 3 085 216 B1**
(45) Veröffentlichungstag und Bekanntmachung des Hinweises auf die Patenterteilung: **07.04.2021**
(21) Anmeldenummer: 16401027.4
(22) Anmeldetag: 19.04.2016
(51) Int. Cl.: A01B 23/02, A01B 35/06

(54) **LANDWIRTSCHAFTLICHE MASCHINE**
AGRICULTURAL MACHINE
MACHINE AGRICOLE

(30) Priorität: 22.04.2015 DE 102015106159
(43) Veröffentlichungstag der Anmeldung: 26.10.2016
(73) Patentinhaber: Amazonen-Werke H. Dreyer GmbH & Co. KG, 49205 Hasbergen (DE)
(72) Erfinder: Hamann, Malte, 26131 Oldenburg (DE)

(56) Entgegenhaltungen:
- WO-A1-2009/102277
- DE-A1-102008 045 635

## Beschreibung

Die Erfindung betrifft eine landwirtschaftliche Maschine gemäß des Oberbegriffes des Patentanspruches 1.

Eine derartige landwirtschaftliche Maschine ist in DE 10 2008 045 635 A1 und in WO2009/102277A beschrieben. Diese landwirtschaftliche Maschine ist als kombinierte Bodenbearbeitung- und Sämaschine ausgebildet. Die Sämaschine weist Säschare auf. Hinter den Säscharen sind zinkenförmige Striegelelemente angeordnet. Die Striegelelemente sind an Striegelhaltern mittels einer eine Gelenklasche aufweisenden Gelenkanordnung befestigt und können über eine Winkeleinstelleinrichtung mit unterschiedlichen Winkeln zur Bodenoberfläche eingestellt werden. Der jeweilige Striegelhalter ist mittels einer als Höheneinstellvorrichtung ausgebildeten Schwenkvorrichtung an dem Scharhalter des jeweiligen Säschares befestigt. Mittels der Höheneinstellvorrichtung kann die Eindringtiefe der Striegelzinken in dem Boden und der auf die Striegelzinken wirkende Druck eingestellt werden.

Durch die als Schwenkvorrichtung ausgebildete Höheneinstellvorrichtung der Striegelzinken verändert sich auch die Winkelanstellung der Striegelzinken zum Boden, wenn die Eindringtiefe der Striegelzinken in den Boden verändert wird. Somit muss dann gleichzeitig auch die Winkelanstellung der Striegelzinken gegenüber dem jeweiligen Striegelhalter verändert werden. Dies ist eine aufwändige zusätzliche Einstellarbeit.

Der Erfindung liegt die Aufgabe zu Grunde, die Einstellung der Striegelzinken zu vereinfachen.

Diese Aufgabe wird erfindungsgemäß dadurch gelöst, dass die Gelenkanordnung des Striegelelementes gemeinsam mit dem Striegelelement gegenüber dem Striegelhalter in Längsrichtung des Striegelhalters verschiebbar angeordnet und in verschiedenen Positionen an dem Striegelhalter mittels einer Arretiervorrichtung festsetzbar ist.

Infolge dieser Maßnahme wird eine verbesserte Höhen- bzw. Tiefeneinstellung der Striegelzinken gegenüber dem Säschar erreicht. Besonders vorteilhaft ist hierbei, in einer Ausführungsform wenn der Verschiebebereich des Striegelzinkens gegenüber dem Striegelhalter möglichst geradlinig ausgebildet ist.

Eine einfache verschiebbare Anordnung der Striegelzinken gegenüber dem Striegelhalter wird dadurch erreicht, dass die Gelenkanordnung eine Lasche aufweist, dass die Lasche gegenüber dem Striegelhalter verschiebbar ist.

Eine einfache Verschiebung und Arretierung der Striegellasche mit dem Striegelzinken gegenüber dem Striegelhalter wird dadurch erreicht, dass der Striegelhalter im Bereich der Gelenkanordnung für das Striegelelement eine längliche schlitzförmige Aussparung mit mehreren beabstandet zueinander angeordneten Rastaussparungen aufweist, dass der Gelenkanordnung ein gegenüber dem Striegelhalter und der Gelenkanordnung verschiebbarer Rastbolzen zum Eingreifen in die Rastaussparungen zugeordnet ist.

Eine einfache Ausgestaltung der Arretierungseinrichtung lässt sich dadurch erreichen, dass dem Rastbolzen zumindest ein federndes Element, welches den Rastbolzen in seine Rastposition mit den Rastaussparungen drückt, zugeordnet ist.

Eine einfache definierte Anordnung und Stellung von Striegelzinken zu Striegelhalter in der Arbeitsstellung der Striegelelemente lässt sich dadurch erreichen, dass das Striegelelement von seinem freien, mit dem Boden im Kontakt stehenden Striegelende ausgesehen, ein über seine Schwenkachse im Bereich der Gelenkanordnung hinausragendes Anschlagelement aufweist, dass das Anschlagelement einen mit dem Scharhalter und/oder Lasche verbundenen Gegenanschlag aufweist.

Eine einfache Entriegelung der Arretierung zwischen der Gelenklasche des Striegelelementes und dem Scharhalter zum Verschieben des Striegelelementes mit der Gelenklasche gegenüber dem Scharhalter wird dadurch erreicht, dass das Striegelelement um seine Schwenkachse verschwenkbar ist, dass nach dem Verschwenken des Striegelelementes um seine Schwenkachse das Anschlagelement des Striegelelementes an dem einen Ende des Rastbolzen zur Anlage kommt und hierdurch der Rastbereich des Rastbolzens aus der Rastaussparung durch weiteres Verschwenken des Striegelelementes durch Aufbringen einer entsprechenden Kraft herausgedrückt wird.

Eine einfache Ausgestaltung des Federdämpfungselementes wird dadurch erreicht, dass das dem Rastbolzen zugeordnete federnde Element als Druckfeder, Gummifeder, elastisches Federelement, etc. ausgebildet ist.

Um das Striegelelement bei entsprechenden Einsatzbedingungen in einer sicheren Außerbetriebsposition zu fixieren, ist vorgesehen, dass der Gelenkanordnung und/oder Lasche eine Festsetzanordnung zum Festsetzen des Striegelelementes nach dem Verschwenken um die Schwenkachse in eine Außerbetriebsposition zugeordnet ist.

Weitere Einzelheiten der Erfindung sind der Beispielsbeschreibung und den Zeichnungen zu entnehmen. Die Zeichnungen zeigen
- Fig.1: ein Säschar mit zugeordnetem sich in Betriebsstellung befindlichem Striegelelement einer landwirtschaftlichen Maschine in perspektivischer Darstellung,

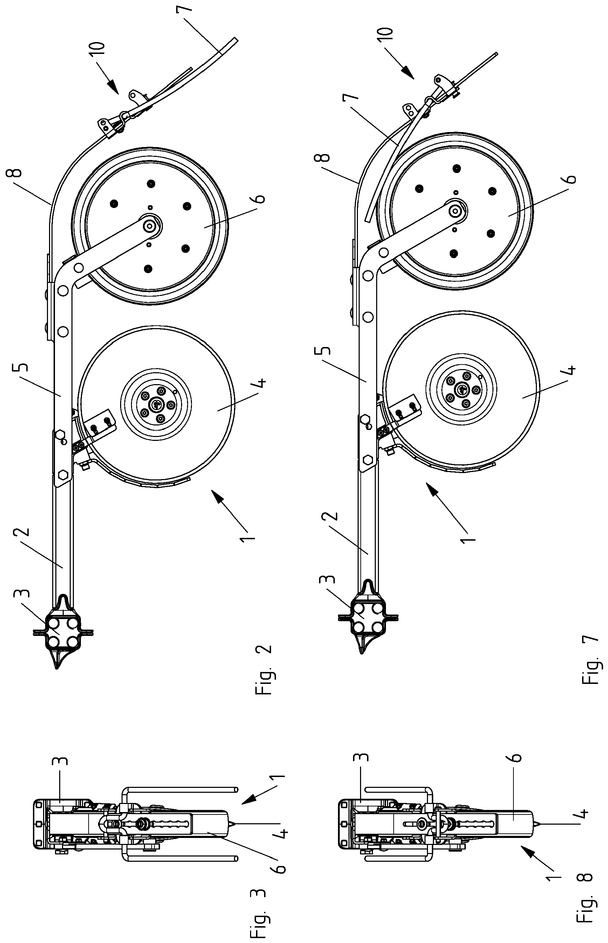

- Fig.2: das Säschar mit zugeordnetem sich in Betriebsstellung befindlichem Striegelelement einer landwirtschaftlichen Maschine in Seitenansicht,
- Fig.3: das Säschar mit zugeordnetem sich in Betriebsstellung befindlichem Striegelelement einer landwirtschaftlichen Maschine in der Ansicht von hinten,
- Fig.4: das sich in Betriebsstellung befindliche Striegelelement in perspektivischer Darstellung und vergrößertem Maßstab,
- Fig.5: das sich in Betriebsstellung befindliche Striegelelement in Seitenansicht und vergrößertem Maßstab,
- Fig.6: das sich in Betriebsstellung befindliche Striegelelement in der Ansicht von oben und vergrößertem Maßstab,
- Fig.7: das Säschar mit zugeordnetem sich in Außerbetriebsstellung befindlichem Striegelelement einer landwirtschaftlichen Maschine in Seitenansicht,
- Fig.8: das Säschar mit zugeordnetem sich in Außerbetriebsstellung befindliche Striegelelement einer landwirtschaftlichen Maschine in der Ansicht von hinten,
- Fig.9: das sich in Außerbetriebsstellung befindliche Striegelelement in perspektivischer Darstellung und vergrößertem Maßstab,
- Fig.10: das sich in Außerbetriebsstellung befindliche Striegelelement in Seitenansicht und vergrößertem Maßstab,
- Fig.11: das sich in Außerbetriebsstellung befindliche Striegelelement in der Ansicht von oben und vergrößertem Maßstab,
- Fig.12: die Gelenkanordnung des Striegelelementes am Striegelhalter bei sich in Betriebsstellung befindlichem Striegelelement in Seitenansicht und vergrößertem Maßstab,
- Fig.13: die Gelenkanordnung des Striegelelementes am Striegelhalter bei sich in Betriebsstellung befindlichem Striegelelement im Schnitt XIII - XIII und vergrößertem Maßstab,
- Fig.14: die Gelenkanordnung des Striegelelementes am Striegelhalter bei sich in Außerbetriebsstellung befindlichem Striegelelement in Seitenansicht und vergrößertem Maßstab,
- Fig.15: die Gelenkanordnung des Striegelelementes am Striegelhalter bei sich in Außerbetriebsstellung befindlichem Striegelelement im Schnitt XV - XV und vergrößertem Maßstab,
- Fig.16: das in der flachsten Betriebsstellung eingestellte Striegelelement in Seitenansicht,
- Fig.17: das in einer veränderten Betriebsstellung eingestellte Striegelelement in Seitenansicht,
- Fig.18: das in der steilsten Betriebsstellung eingestellte Striegelelement in Seitenansicht,
- Fig.19: das in der Außerbetriebsstellung eingestellte Striegelelement in Seitenansicht und
- Fig.20: das in Betriebsstellung befindliche Striegelelement in der Darstellungsweise nach Fig.4, jedoch gegenüber der in Fig.4 dargestellten Position nach unten gegenüber dem Striegelhalter verschobenen Position.

Das Säschar 1 ist über den Scharhalter 2 und das Gelenk 3 an einem nicht dargestellten Querbalken einer landwirtschaftlichen Maschine, die beispielsweise als Bodenbearbeitungsgerät oder Sämaschine ausgebildet ist, in aufrechter Ebene bewegbar angeordnet. Das Säschar 1 weist zumindest eine drehbar angeordnete und schräg zur Fahrtrichtung angestellte Scharscheibe 4 auf. Hinter dem Säschar 1 ist über einen Tragarm 5 an dem Scharhalter 2 eine Tiefenführungs- und/oder Andruckrolle 6 angeordnet. Hinter dem Säschar 1 und der Rolle 6 ist ein zinkenförmiges über dem Boden führbares und/oder in den Boden eingreifendes Striegelelement 7 angeordnet. Dieses Striegelelement 7 an einem Striegelhalter 8 befestigt. Dieser Striegelhalter erstreckt sich von seiner Befestigungsstelle 9 am Schar 1 bzw. Scharhalter 2 nach hinten.

Das Striegelelement 7 ist mit einer Gelenkanordnung 10, die eine Lasche 11 aufweist, an dem Striegelhalter 8 befestigt. Im Befestigungsbereich 12 der Lasche 10 weist der Striegelhalter 8 eine Rastkulisse 13, die als längliche schlitzförmige Aussparung 14 mit mehreren beabstandet zueinander angeordneten Rastaussparungen 15 ausgebildet ist, auf. Die Lasche 11 mit Gelenkanordnung 10 und dem Striegelelement 7 ist gegenüber dem Striegelhalter 8 zur Einstellung des Striegelelementes 7 verschiebbar. Der Lasche 11 ist ein verschiebbarer Rastbolzen 16 zugeordnet. Der Rastbolzen 16 weist einen ersten Bereich 17 mit auf die Form und Größe der Aussparungen 15 abgestimmte Ausgestaltung auf. Hieran schließt sich ein zweiter Bereich 18 an, der eine geringere Abmessung, abgestimmt auf die Breite der schlitzförmigen Aussparung 14, aufweist. Des Weiteren ist dem Rastbolzen 16 ein federndes Element 19 zugeordnet, welches so auf dem Rastbolzen 16 angeordnet ist, dass der Rastbolzen 16 das Bestreben hat, den ersten Bereich 17 in die Aussparung 14 zu bewegen und dort zu halten. Durch das Eingreifen des Rastbolzens 16 in die Rastaussparungen 15 wird die Lasche 11 mit der Gelenkanordnung 10 gegenüber dem Striegelhalter 8 in der eingestellten Position arretiert.

Somit ist die Lasche 11 mit der Gelenkanordnung 10 des Striegelelementes 7 gemeinsam mit dem Striegelelement 7 gegenüber dem Striegelhalter 8 in Längsrichtung des Striegelhalters 8 verschiebbar angeordnet und in verschiedenen Positionen an dem Striegelhalter 8 mittels der als Rastbolzen 16 und Rastkulisse 13 ausgebildeten Arretiervorrichtung festsetzbar.

Das Striegelelement 7 ist gegenüber dem Striegelhalter 8 um eine quer zur Fahrtrichtung verlaufende und zumindest annähernd horizontal ausgerichtete Schwenkachse 20 gegenüber dem Striegelhalter 8 mittels einer Gelenkanordnung 10 am Striegelhalter 8 verschwenkbar angeordnet. Das Striegelelement 7 weist von seinem freien, mit dem Boden im Kontakt stehenden Striegelende 21 ausgesehen, ein über seine Schwenkachse 20 im Bereich der Gelenkanordnung 10 hinausragendes Anschlagelement 22 auf. Hierbei wirkt das Anschlagelement 22 einen mit dem Scharhalter 8 und/oder Lasche 11 verbundenen Gegenanschlag 23 auf. Dieser Gegenanschlag 23 ist als Steckbolzen ausgebildet und kann in verschiedene in der Lasche 11 angeordnet Bohrungen 24 gesteckt werden. Hierdurch kann das Striegelelement 7 in verschiedene Winkelstellungen eingestellt werden.

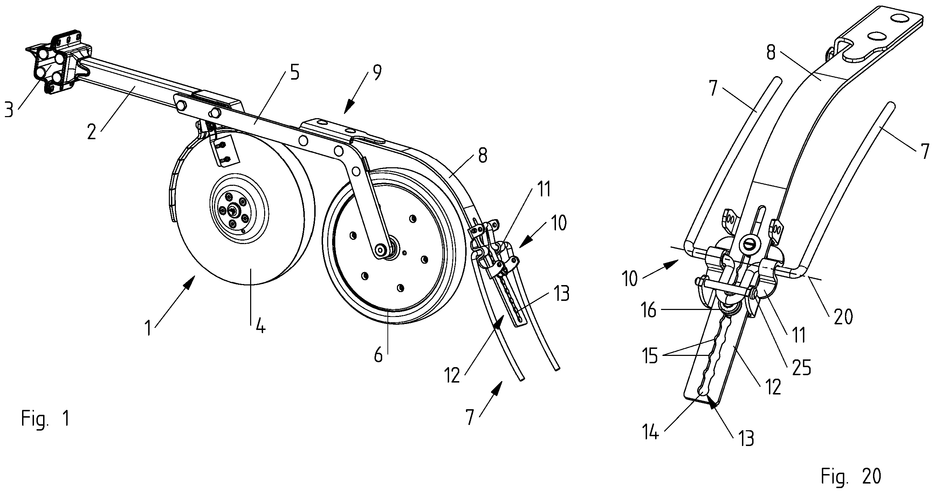

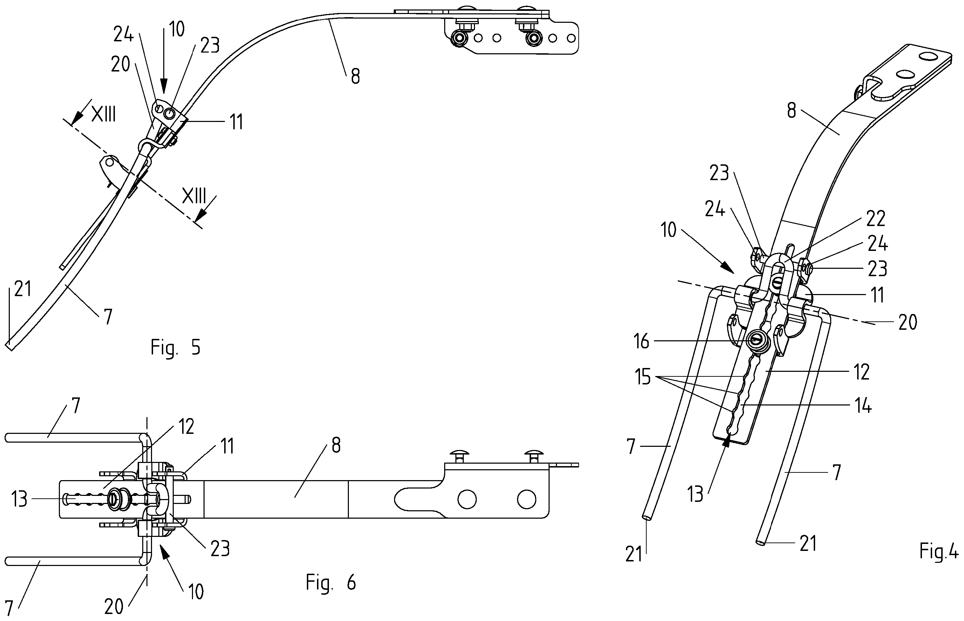

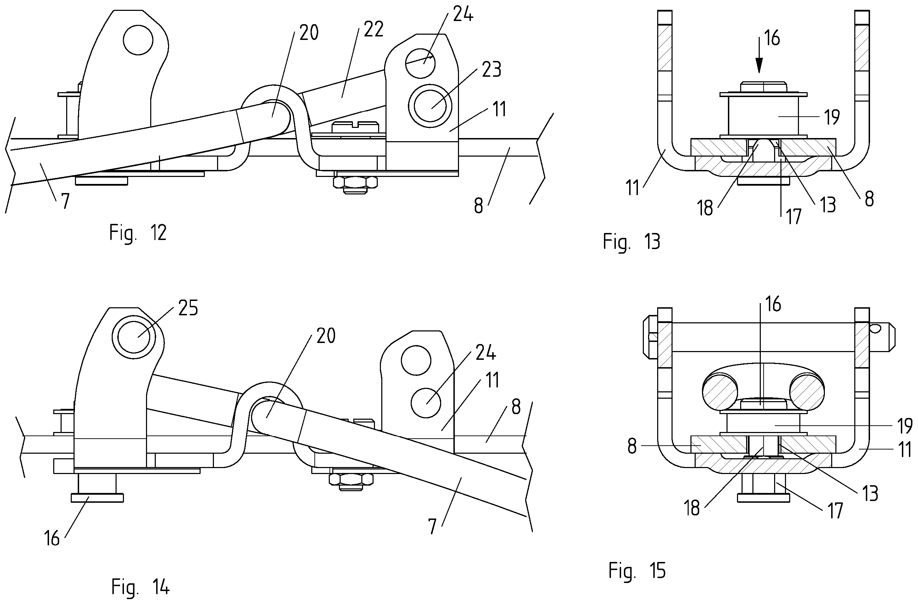

Durch diese entsprechende Anordnung ist das Striegelelement 7 um seine Schwenkachse 20 verschwenkbar. Nach dem Verschwenken des Striegelelementes 7 um seine Schwenkachse 20 kommt das Anschlagelement 22 des Striegelelementes 7 an dem einen Ende des Rastbolzens 16 zur Anlage. Durch weiteres Verschwenken des Striegelelementes 7 wird der Rastbereich 17 des Rastbolzens 16 aus der Rastaussparung 15 durch Aufbringen einer entsprechenden Kraft herausgedrückt, wie die Fig.14 und 15 zeigen. Jetzt kann die Lasche 11 mit dem Striegelelement 7 gegenüber dem Striegelhalter 8 in die vorgesehene Position zur Einstellung des Striegelelementes 7 in die richtige Position verschoben werden. Nach dem Erreichen der richtigen Position wird durch entgegengesetztes Verschwenken des Striegelelementes 7 die hierdurch auf den Rastbolzen 16 einwirkende Kraft weggenommen, so dass der Rastbolzen 16 mit seinem ersten Bereich 17 in die Aussparung 15 der Rastkulisse 13 einrasten kann, wie Fig.13 zeigt. Somit sind unterschiedliche Positionen des Striegelelementes 7 gegenüber dem Scharhalter 8 einzustellen, wie beispielhaft ein Vergleich der Fig.4 und 20 zeigt.

Das Verschieben des Rastbolzens 16 in die Rastposition wird durch das dem Rastbolzen 16 zugeordnete federnde Element 19 gewährleistet. Dieses federnde Element 19 kann als Druckfeder, Gummifeder, elastisches Federelement, etc. ausgebildet sein.

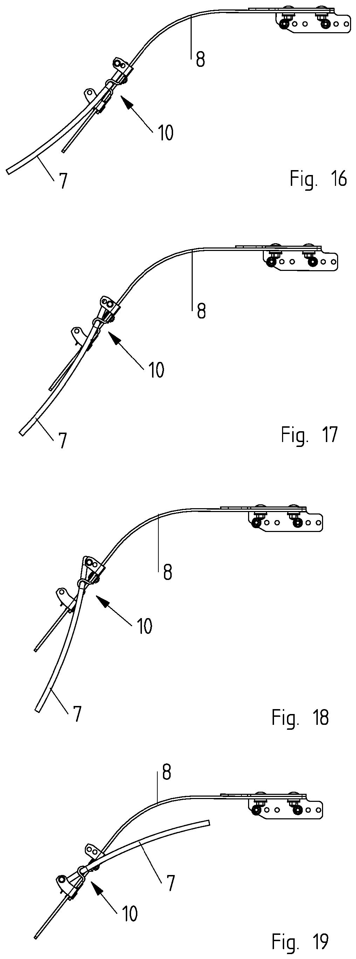

Das Striegelelement 7 kann in unterschiedlichen Winkelpositionen zu der Lasche 11 und dem Striegelhalter 8 durch entsprechendes abstecken durch den Einstellbolzen 23, der in die entsprechende Bohrung 24 der Lasche 11 entsprechend einsteckbar ist, wie die Fig.17-18 zeigen.

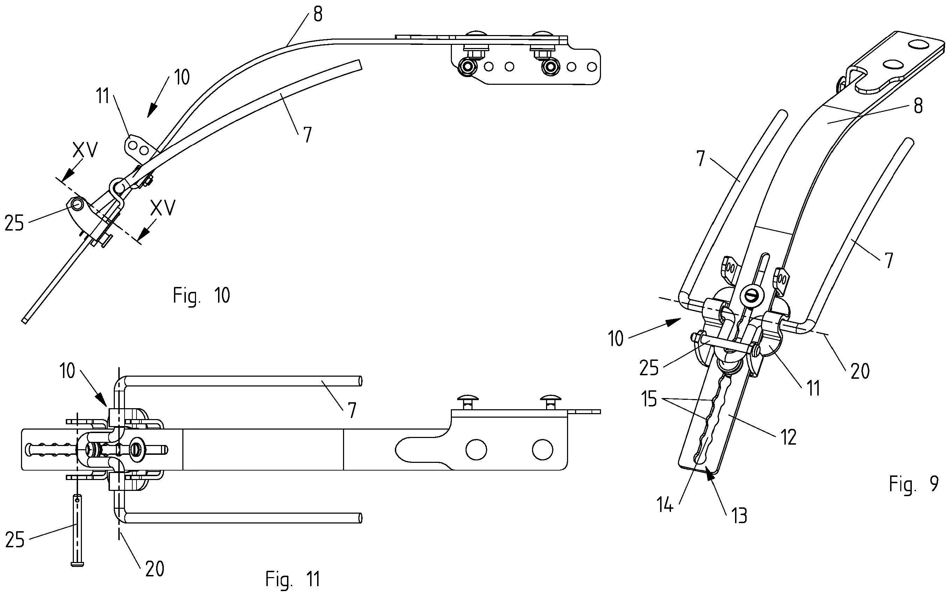

Das Striegelelement 7 kann auch in eine Außerbetriebsposition festgesetzt werden, wie die Fig.9, bis 11 und 19 zeigen. Hierzu ist der Gelenkanordnung 10 und/oder Lasche 11 eine Festsetzanordnung 25 zum Festsetzen des Striegelelementes 7 nach dem Verschwenken um die Schwenkachse 20 in eine Außerbetriebsposition gemäß den Fig. 9-11 und 19 zugeordnet.

## Patentansprüche

1. Landwirtschaftliche Maschine, insbesondere Bodenbearbeitungsgerät, wie Sämaschine oder dergleichen, mit zumindest einem Scharstriegel (7), der ein vorzugsweise zinkenförmiges, über den Boden führbares und/oder in den Boden eingreifendes Striegelelement (7) aufweist, das von einem sich von seiner Befestigungsstelle (9) am Schar (1) nach hinten erstreckenden Striegelhalter (8) gehalten ist, wobei das Striegelelement (7) gegenüber dem Striegelhalter (8) um eine quer zur Fahrtrichtung verlaufende und zumindest annähernd horizontal ausgerichtete Schwenkachse (20) gegenüber dem Striegelhalter (8) mittels einer Gelenkanordnung (10) am Striegelhalter (8) verschwenkbar angeordnet ist, **dadurch gekennzeichnet, dass** die Gelenkanordnung (10) des Striegelelementes (7) gemeinsam mit dem Striegelelement (7) gegenüber dem Striegelhalter (8) in Längsrichtung des Striegelhalters (8) verschiebbar angeordnet und in verschiedenen Positionen an dem Striegelhalter (8) mittels einer Arretiervorrichtung (13, 16) festsetzbar ist.

2. Landwirtschaftliche Maschine nach Anspruch 1, **dadurch gekennzeichnet, dass** die Gelenkanordnung (10) eine Lasche (11) aufweist, dass die Lasche (11) gegenüber dem Striegelhalter (8) verschiebbar ist.

3. Landwirtschaftliche Maschine nach mindestens einem der vorstehenden Ansprüche, **dadurch gekennzeichnet, dass** der Striegelhalter (8) im Bereich der Gelenkanordnung (10) für das Striegelelement (7) eine längliche schlitzförmige Aussparung (14) mit mehreren beabstandet zueinander angeordneten Rastaussparungen (15( aufweist, dass der Gelenkanordnung (10) ein gegenüber dem Striegelhalter (8) und der Gelenkanordnung (10) verschiebbarer Rastbolzen (16) zum Eingreifen in die Rastaussparungen (15) zugeordnet ist.

4. Landwirtschaftliche Maschine nach mindestens einem der vorstehenden Ansprüche, **dadurch gekennzeichnet, dass** dem Rastbolzen (16) zumindest ein federndes Element (19), welches den Rastbolzen (16) in seine Rastposition mit den Rastaussparungen (15) drückt, zugeordnet ist.

5. Landwirtschaftliche Maschine nach mindestens einem der vorstehenden Ansprüche, **dadurch gekennzeichnet, dass** das Striegelelement (7) von seinem freien, mit dem Boden im Kontakt stehenden Striegelende (21) ausgesehen, ein über seine Schwenkachse (20) im Bereich der Gelenkanordnung (10) hinausragendes Anschlagelement (20) aufweist, dass das Anschlagelement (20) einen mit dem Striegelhalter (8) und/oder Lasche (11) verbundenen Gegenanschlag (23) aufweist.

6. Landwirtschaftliche Maschine nach mindestens einem der vorstehenden Ansprüche, **dadurch gekennzeichnet, dass** das Striegelelement (7) um seine Schwenkachse (20) verschwenkbar ist, dass nach dem Verschwenken des Striegelelementes (7) um seine Schwenkachse (20) das Anschlagelement (20) des Striegelelementes (7) an dem einen Ende des Rastbolzen (16) zur Anlage kommt und hierdurch der Rastbereich (17) des Rastbolzens (16) aus der Rastaussparung (15) durch weiteres Verschwenken des Striegelelementes (7) durch Aufbringen einer entsprechenden Kraft herausgedrückt wird.

7. Landwirtschaftliche Maschine nach mindestens einem der vorstehenden Ansprüche, **dadurch gekennzeichnet, dass** das dem Rastbolzen (16) zugeordnete federnde Element (19) als Druckfeder, Gummifeder, elastisches Federelement, etc. ausgebildet ist.

8. Landwirtschaftliche Maschine nach mindestens einem der vorstehenden Ansprüche, **dadurch gekennzeichnet, dass** der Gelenkanordnung (10) und/oder Lasche (11) eine Festsetzanordnung (25) zum Festsetzen des Striegelelementes (7) nach dem Verschwenken um die Schwenkachse (20) in eine Außerbetriebsposition zugeordnet ist.

## Claims

1. Agricultural machine, in particular a soil cultivation device, such as a seed drill or the like, having at least one coulter harrow (7), which has a preferably tine-like harrow element (7) that is guidable over the soil and/or engages in the soil and is held by a harrow holder (8) that extends to the rear from its fastening point (9) on the coulter (1), wherein the harrow element (7) is arranged on the harrow holder (8) so as to be pivotable with respect to the harrow holder (8) about a pivot axis (20) that extends transversely to the direction of travel and is oriented at least approximately horizontally with respect to the harrow holder (8) by means of a joint arrangement (10), **characterized in that** the joint arrangement (10) of the harrow element (7) is arranged so as to be displaceable, together with the harrow element (7), with respect to the harrow holder (8) in the longitudinal direction of the harrow holder (8) and is able to be fixed in different positions on the harrow holder (8) by means of a locking apparatus (13, 16).

2. Agricultural machine according to Claim 1, **characterized in that** the joint arrangement (10) has a bracket (11), and **in that** the bracket (11) is displaceable relative to the harrow holder (8).

3. Agricultural machine according to at least one of the preceding claims, **characterized in that** the harrow holder (8) has, in the region of the joint arrangement (10) for the harrow element (7), an elongate slot-like cutout (14) with a plurality of latching cutouts (15) arranged in a manner spaced apart from one another, and **in that** the joint arrangement (10) is assigned a latching pin (16), which is displaceable relative to the harrow holder (8) and the joint arrangement (10), for engaging in the latching cutouts (15).

4. Agricultural machine according to at least one of the preceding claims, **characterized in that** the latching pin (16) is assigned at least one resilient element (19), which pushes the latching pin (16) into its latched position with the latching cutouts (15).

5. Agricultural machine according to at least one of the preceding claims, **characterized in that** the harrow element (7), as seen from its free harrow end (21) in contact with the soil, has a stop element (20) that projects beyond its pivot axis (20) in the region of the joint arrangement (10), and **in that** the stop element (20) has a counterpart stop (23) connected to the harrow holder (8) and/or the bracket (11).

6. Agricultural machine according to at least one of the preceding claims, **characterized in that** the harrow element (7) is pivotable about its pivot axis (20), and **in that** after the harrow element (7) has pivoted about its pivot axis (20), the stop element (20) of the harrow element (7) comes to bear against one end of the latching pin (16) and as a result the latching region (17) of the latching pin (16) is pushed out of the latching cutout (15) by the harrow element (7) being pivoted further by application of an appropriate force.

7. Agricultural machine according to at least one of the preceding claims, **characterized in that** the resilient element (19) assigned to the latching pin (16) is in the form of a compression spring, rubber spring, resilient spring element, etc.

8. Agricultural machine according to at least one of the preceding claims, **characterized in that** the joint arrangement (10) and/or bracket (11) is assigned a fixing arrangement (25) for fixing the harrow element (7) after it has been pivoted about the pivot axis (20) into a non-operational position.

## Revendications

1. Machine agricole, en particulier outil pour le travail du sol, tel qu'un semoir ou similaires, comprenant au moins une herse de recouvrement (7) qui présente un élément de recouvreur (7) de préférence en forme de dent, pouvant être guidé sur le sol et/ou s'engageant dans le sol, qui est maintenu par un support de recouvreur (8) s'étendant vers l'arrière à partir de son point de fixation (9) sur le soc (1), dans laquelle l'élément de recouvreur (7) est disposé sur le support de recouvreur (8) au moyen d'un ensemble articulé (10) de manière à pouvoir pivoter par rapport au support de recouvreur (8) autour d'un axe de pivotement (20) s'étendant transversalement au sens de la marche et orienté de manière au moins approximativement horizontale par rapport au support de recouvreur (8),
**caractérisée en ce que** l'ensemble articulé (10) de l'élément de recouvreur (7) est disposé de manière coulissante conjointement avec l'élément de recouvreur (7) par rapport au support de recouvreur (8) dans la direction longitudinale du support de recouvreur (8) et peut être fixé dans différentes positions sur le support de recouvreur (8) au moyen d'un dispositif de blocage (13, 16).

2. Machine agricole selon la revendication 1, **caractérisée en ce que** l'ensemble articulé (10) présente une patte (11), la patte (11) étant coulissante par rapport au support de recouvreur (8).

3. Machine agricole selon au moins l'une des revendications précédentes, **caractérisée en ce que** le support de recouvreur (8) présente au niveau de l'ensemble articulé (10) pour l'élément de recouvreur (7) un évidement allongé (14) en forme de fente, doté de plusieurs évidements d'arrêt (15) disposés à distance les uns des autres, l'ensemble articulé (10) étant associé à un boulon d'arrêt (16) coulissant par rapport au support de recouvreur (8) et à l'ensemble articulé (10) pour venir en prise avec les évidements d'arrêt (15).

4. Machine agricole selon au moins l'une des revendications précédentes, **caractérisée en ce que** le boulon d'arrêt (16) est associé à au moins un élément faisant ressort (19) qui pousse le boulon d'arrêt (16) dans sa position d'arrêt avec les évidements d'arrêt (15) .

5. Machine agricole selon au moins l'une des revendications précédentes, **caractérisée en ce que** l'élément de recouvreur (7), vu à partir de son extrémité de recouvreur (21) libre, en contact avec le sol, présente un élément de butée (20) faisant saillie au-delà de son axe de pivotement (20) au niveau de l'ensemble articulé (10), l'élément de butée (20) présentant une contre-butée (23) reliée au support de recouvreur (8) et/ou à la patte (11).

6. Machine agricole selon au moins l'une des revendications précédentes, **caractérisée en ce que** l'élément de recouvreur (7) est pivotant autour de son axe de pivotement (20), **en ce qu'**après le pivotement de l'élément de recouvreur (7) autour de son axe de pivotement (20), l'élément de butée (20) de l'élément de recouvreur (7) vient en butée à ladite une extrémité du boulon d'arrêt (16), et de ce fait, la zone d'arrêt (17) du boulon d'arrêt (16) est éjectée de l'évidement d'arrêt (15) par un pivotement supplémentaire de l'élément de recouvreur (7) par l'application d'une force adéquate.

7. Machine agricole selon au moins l'une des revendications précédentes, **caractérisée en ce que** l'élément faisant ressort (19) associé au boulon d'arrêt (16) est réalisé sous la forme d'un ressort de compression, d'un ressort en caoutchouc, d'un élément de ressort élastique, etc.

8. Machine agricole selon au moins l'une des revendications précédentes, **caractérisée en ce que** l'ensemble articulé (10) et/ou la patte (11) est associé(e)/sont associés à un ensemble de fixation (25) pour fixer l'élément de recouvreur (7) dans une position hors service après le pivotement autour de l'axe de pivotement (20).
